# EUROPÄISCHE PATENTSCHRIFT

(11) **EP 3 798 081 B1**
(45) Veröffentlichungstag und Bekanntmachung des Hinweises auf die Patenterteilung: **23.08.2023**
(21) Anmeldenummer: 20184840.5
(22) Anmeldetag: 09.07.2020
(51) Int. Cl.: B61D 17/06, B62D 25/08

(54) **FAHRZEUGSÄULE FÜR EIN SCHIENENFAHRZEUG UND SCHIENENFAHRZEUG MIT FAHRZEUGSÄULEN**
A-COLUMN AND RAILWAY VEHICLE WITH A-COLUMNS
MONTANT DE CARROSSERIE ET VÉHICULE FERROVIAIRE ÉQUIPÉ DE TELS MONTANTS

(30) Priorität: 30.09.2019 DE 102019214982
(43) Veröffentlichungstag der Anmeldung: 31.03.2021
(73) Patentinhaber: Siemens Mobility GmbH, 81739 München (DE)
(72) Erfinder: Reindl, Johannes, 90762 Fürth (DE)
(74) Vertreter: Siemens Patent Attorneys

(56) Entgegenhaltungen:
- CN-U- 207 712 057
- DE-A1-102006 015 405
- DE-A1-102010 056 386
- DE-A1-102014 204 194
- JP-A- 2003 276 519
- PL-Y1- 63 970

## Beschreibung

Die Erfindung betrifft eine Fahrzeugsäule und ein Schienenfahrzeug mit Fahrzeugsäulen. Ein derartiges Schienenfahrzeug ist z. B. aus der Offenbarung CN 207 712 057 U bekannt.

Tragende Fahrzeugsäulen verbinden den Dachbereich (Dach und innere Seitenteile) mit dem Karosserieunterbau (Schweller, Boden vorn/hinten) eines Fahrzeugs. Dabei wird die vorderste Fahrzeugsäule unabhängig von der Fahrzeugseite als A-Säule bezeichnet.

Klassische Konstruktionsweisen von Führerständen und Frontmasken von Schienenfahrzeugen, insbesondere von Straßenbahnen, müssen durch Normen vorgegebene Sichtfeldanforderungen sowie Anforderungen, den passiven Passantenschutz betreffend einhalten, da sonst das betreffende Fahrzeug keine Betriebserlaubnis erhält. Dazu gehören insbesondere von den Normen geforderte und einzuhaltende Grenzen der Sichtwinkel, die einem Fahrer insbesondere zwischen den A-Säulen, aber auch seitlich, links bzw. rechts der betreffenden A-Säule eines Fahrzeugs zur Verfügung stehen müssen. Da für die Erfüllung der entsprechenden Normen permanent strengere Anforderungen, z. B. einzuhaltende Grenzwerte, gefordert werden, wird das vordere Sichtfeld des Fahrers zunehmend eingeschränkt, so dass diese Anforderungen mit den bislang üblichen Konstruktionsweisen, Positionen und Größen der A-Säulen kaum noch einzuhalten sind.

Bisher wurden Seiten- und Frontfenster eines Schienenfahrzeugs in der Regel in eine einteilige Glasfaserkunststoff-Kopfmaske (GFK) geklebt. Die entsprechenden Klebeflächen für die Scheiben wurden von der GFK-Maske zur Verfügung gestellt. Die zusätzliche Anforderung einer ausreichenden Steifigkeit, die aus entsprechendem Crashverhalten herrührt, wurde üblicherweise in Form von separat platzierten, metallischen A-Säulen dahinter oder einer massiven GFK-Struktur erfüllt. Mit den, sich daraus ergebenden Sichtwinkeln können die derzeit geforderten Grenzwerte überwiegend nicht mehr eingehalten werden.

Der Erfindung liegt die Aufgabe zugrunde, eine Fahrzeugsäule sowie ein Schienenfahrzeug mit Fahrzeugsäulen anzugeben, durch die das Sichtfeld des Fahrzeugführers nicht eingeschränkt wird.

Gelöst wird die Aufgabe durch die Merkmale des unabhängigen Patentanspruchs 1. Weiterbildungen und Ausgestaltungen der Erfindung finden sich in den Merkmalen der abhängigen Patentansprüche wieder.

Dazu wird eine Fahrzeugsäule angegeben, die wenigstens teilweise für die Verbindung mit einer Frontscheibe und einer Seitenscheibe des Fahrzeugs vorgesehen ist.

Die erfindungsgemäße Lösung hat den Vorteil, dass durch die Verbindung der Fahrzeugsäule mit Front- und Seitenscheibe des Fahrzeugs, die vorher separat im Führerstand angebrachte Fahrzeugsäule näher an der Fahrzeugkarosserie angeordnet ist und sich dadurch ein erweitertes Sichtfeld für den Fahrzeugführer ergibt.

Darüber hinaus ist die Fahrzeugsäule als Hohlprofil mit einem, im wesentlichen deltoiden Profilquerschnitt ausgeführt. Dabei weist der deltoide Profilquerschnitt des Hohlprofils vier Seiten auf, von denen die zwei kürzeren Seiten des Profilquerschnitts die beiden Seiten der Fahrzeugsäule festlegen, die für die wenigstens teilweise unmittelbare Verbindung der Fahrzeugsäule mit einer Frontscheibe und einer Seitenscheibe des Fahrzeugs vorgesehen sind. Durch diesen speziellen Profilquerschnitt bekommt die Fahrzeugsäule sowohl die notwendige Steifigkeit für einen möglichen Crashfall und weist gleichzeitig die Verbindungsflächen, beispielsweise Klebeflächen, zur Verbindung mit Front- und Seitenscheiben des Fahrzeugs auf. Darüber hinaus verbessert sich damit auch das Sichtfeld für den Fahrzeugführer, da die Fahrzeugsäule bezüglich dessen Blickrichtung in Fahrtrichtung entsprechend geometrisch angepasst, insbesondere verschlankt ist.

Je nach Anwendungsfall ist grundsätzlich aber auch der Einsatz bzw. die Verwendung anderer Profilquerschnitte, wie beispielsweise rhomboide, oder andere viereckige, aber auch fünfeckige, sechseckige oder andere mehreckige Profilquerschnitte denkbar und möglich.

Das Hohlprofil und somit die Fahrzeugsäule besteht bevorzugt aus Metall, andere Materialien, z.B. Glasfaserkunststoffe, etc., oder auch Mischmaterialien sind aber ebenfalls denkbar und möglich.

Bevorzugt grenzen die zwei kürzeren Seiten des Profilquerschnitts des Hohlprofils stumpfwinklig und besonders bevorzugt in einem Winkelbereich zwischen 130° und 140° aneinander. Dadurch ist die erfindungsgemäße Lösung der Fahrzeugsäule sehr flexibel für unterschiedlichste geometrische Randbedingungen bei verschiedenen Fahrzeugen, bzw. Fahrzeugtypen einsetzbar, unter gleichzeitiger Beibehaltung der notwendigen Steifigkeit für einen möglichen Crashfall.

Nach einer weiteren bevorzugten Ausführungsform der Erfindung entspricht die Länge der zwei kürzeren Seiten des Profilquerschnitts des Hohlprofils zusammengenommen im Wesentlichen der Länge einer der zwei längeren Seiten des Profilquerschnitts des Hohlprofils. Damit erhöht sich insbesondere die Steifigkeit des Hohlprofils und somit der Fahrzeugsäule weiter.

Besonders bevorzugt weisen die zwei kürzeren Seiten des Profilquerschnitts des Hohlprofils im Wesentlichen die gleiche Länge auf. Dadurch stehen genügend große Verbindungsflächen der Fahrzeugsäule zur Verfügung, mit denen eine dauerhafte und wartungsfreie Verbindung, beispielsweise Klebeverbindung, zwischen erfindungsgemäßer Fahrzeugsäule und Front- und Seitenscheiben des Fahrzeugs gewährleistet ist.

Gemäß der Erfindung weisen die Längen der zwei kürzeren Seiten des Profilquerschnitts des Hohlprofils im Wesentlichen ein Verhältnis von 1 zu 2 zueinander auf. Dabei legt die kürzere der zwei kürzeren Seiten des Profilquerschnitts des Hohlprofils die Seite der Fahrzeugsäule festlegt, die für die wenigstens teilweise unmittelbare Verbindung mit der Frontscheibe des Fahrzeugs vorgesehen ist. Die längere der beiden kürzeren Seiten des Profilquerschnitts des Hohlprofils legt demzufolge die Seite der Fahrzeugsäule fest, die für die wenigstens teilweise unmittelbare Verbindung mit einer Seitenscheibe des Fahrzeugs vorgesehen ist. Dadurch wird das Hohlprofil und somit die Fahrzeugsäule einerseits bezüglich der Größe bzw. Breite des Sichtwinkels, bzw. des Sichtfelds des Fahrzeugführers entsprechend optimiert und gewährleistet andererseits nach wie vor noch genügend große Verbindungsflächen zur dauerhaften und wartungsfreien Verbindung, beispielsweise Klebeverbindung, zwischen erfindungsgemäßer Fahrzeugsäule und Front- und Seitenscheiben des Fahrzeugs.

Bevorzugt grenzen die zwei längeren Seiten des Profilquerschnitts des Hohlprofils spitzwinklig aneinander.

Besonders bevorzugt sind die zwei längeren Seiten des Profilquerschnitts des Hohlprofils bogenförmig miteinander verbunden.

Bevorzugt weisen die zwei längeren Seiten des Profilquerschnitts des Hohlprofils im Wesentlichen die gleiche Länge auf.

Alle drei vorstehend erwähnten Ausführungsformen der Erfindung verbessern insbesondere die Steifigkeit der Fahrzeugsäule sowie verringern gleichzeitig auch die Breite der Fahrzeugsäule bzgl. der Blickrichtung des Fahrzeugführers, sodass dessen Sichtfeld bzw. der Bereich seines Sichtwinkels sich entsprechend verbreitert bzw. vergrößert.

Nach einer weiteren, besonders bevorzugten Ausführungsform der Erfindung ist die wenigstens teilweise unmittelbare Verbindung der beiden Seiten der Fahrzeugsäule mit der Frontscheibe und einer Seitenscheibe des Fahrzeugs als Klebeverbindung ausgeführt. Eine Klebeverbindung gewährleistet eine einfache, dauerhafte und wartungsfreie Verbindung und ist somit insbesondere eine sehr vorteilhafte und kostengünstige Verbindungsmethode.

Die erfindungsgemäße Fahrzeugsäule ist somit ein multifunktionales Bauteil, welches über die Eigenschaften eines strukturellen Crash-Elements mit der notwendigen Steifigkeit verfügt, die Verbindungs-, insbesondere Klebeflächen für die Front- und Seitenscheiben des Fahrzeugs in ausreichender Breite zur Verfügung stellt und einen bezüglich Schlankheit optimierten Profilquerschnitt dergestalt aufweist, dass dem Fahrzeugführer ein möglichst breiter Sichtfeldwinkel zur Verfügung steht. Mit dem besonders bevorzugten Einsatz von zwei erfindungsgemäßen Fahrzeugsäulen als A-Säulen in einem Schienenfahrzeug, beispielsweise einer Straßenbahn, d.h. jeweils einer Fahrzeugsäule links und rechts im Führerstand des Fahrzeugs, können demzufolge deutliche Kosteneinsparungen gegenüber der bisherigen Konstruktions- bzw. Fertigungsweise erzielt werden.

Zusammengefasst ist die erfindungsgemäße Fahrzeugsäule für eine wenigstens teilweise Verbindung mit einer Frontscheibe und einer Seitenscheibe eines Fahrzeugs, insbesondere Schienenfahrzeugs vorgesehen, wobei die Fahrzeugsäule als Hohlprofil mit einem im wesentlichen deltoiden Profilquerschnitt ausgeführt ist. Die Fahrzeugsäule ist dabei konstruktiv derart optimiert, um das vordere Sichtfeld des Fahrzeugführers möglichst wenig einzuschränken, bei gleichzeitiger Einhaltung der Vorgaben hinsichtlich Sichtfeldanforderungen, insbesondere Sichtwinkel, sowie Steifigkeit im Crashfall.

Im Weiteren werden bevorzugte Ausführungsbeispiele der Erfindung mit Bezugnahme auf die Zeichnungen näher erläutert. Es zeigen:
- Fig. 1: einen vergrößerten Ausschnitt der Explosionsdarstellung eines Querschnitts einer erfindungsgemäßen Fahrzeugsäule (1) und
- Fig. 2: eine Draufsicht auf den Querschnitt eines Schienenfahrzeugs (10) mit zwei erfindungsgemäßen Fahrzeugsäulen (1).

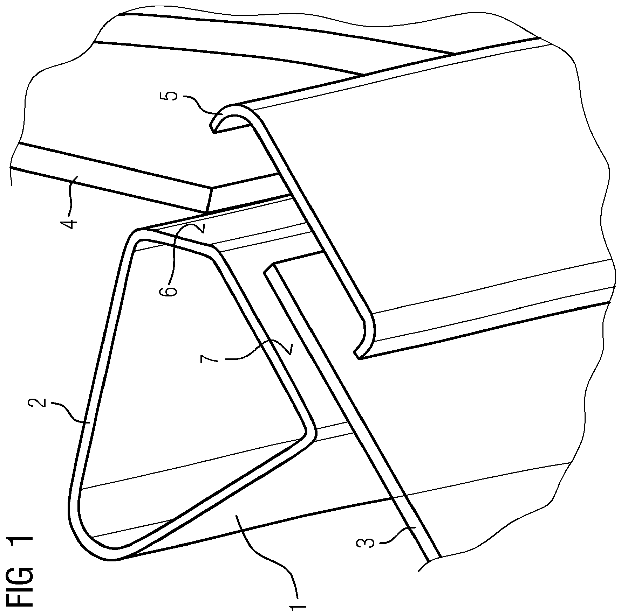

Fig. 1 zeigt einen vergrößerten Ausschnitt der Explosionsdarstellung eines Querschnitts einer erfindungsgemäßen Fahrzeugsäule (1).

Die Fahrzeugsäule (1) ist als Hohlprofil mit deltoidem Profilquerschnitt (2) ausgeführt. Der Profilquerschnitt (2) des Hohlprofils und somit der Fahrzeugsäule (1) weist dabei zwei kürzere Seiten und zwei längere Seiten auf, wobei die beiden kürzeren Seiten des Profilquerschnitts die beiden Seiten (6, 7) der Fahrzeugsäule (1) festlegen, die als Verbindungs-, insbesondere Klebeflächen (6, 7) für die unmittelbare Verbindung der Fahrzeugsäule (1) mit einer Frontscheibe (4) und einer Seitenscheibe (3) eines Fahrzeugs vorgesehen sind.

Fig. 1 zeigt, dass die beiden kürzeren Seiten des Profilquerschnitts (2) der Fahrzeugsäule (1) stumpfwinklig miteinander verbunden sind, und vorliegend einen Winkel von ca. 135° einschließen. Ein Winkel zwischen 130° und 140° ist besonders vorteilhaft, da die Fahrzeugsäule (1) einerseits sehr flexibel für unterschiedliche geometrische Randbedingungen bei verschiedenen Fahrzeugen einsetzbar ist, und andererseits gleichzeitig die notwendige Steifigkeit für einen möglichen Crashfall beibehält.

Die Länge der zwei kürzeren Seiten des Profilquerschnitts (2) der Fahrzeugsäule (1) zusammengenommen entspricht im Wesentlichen der Länge einer der zwei längeren Seiten des Profilquerschnitts (2) der Fahrzeugsäule (1), wodurch sich insbesondere die Steifigkeit der Fahrzeugsäule (1) weiter erhöht. Die Längen der zwei kürzeren Seiten des Profilquerschnitts (2) der Fahrzeugsäule (1) weisen dabei etwa ein Verhältnis von 1 zu 2 zueinander auf. Ein deutlich kleineres Verhältnis, beispielsweise von 1 zu 3 oder 1 zu 4, etc. ist bzgl. der verfügbaren Klebeflächen, insbesondere für die Frontscheibe (4) dagegen eher ungünstig. Die kürzere der zwei kürzeren Seiten des Profilquerschnitts (2) legt dabei die Klebefläche (6) der Fahrzeugsäule (1) fest, die mit der Frontscheibe (4) des Fahrzeugs verklebt wird. Die längere der beiden kürzeren Seiten des Profilquerschnitts (2) der Fahrzeugsäule (1) legt entsprechend die Klebefläche (7) der Fahrzeugsäule (1) fest, die mit der Seitenscheibe (3) des Fahrzeugs verklebt wird. Dadurch wird die Fahrzeugsäule (1) einerseits bezüglich der Größe bzw. Breite des Sichtwinkels, bzw. des Sichtfelds des Fahrzeugführers entsprechend optimiert und gewährleistet andererseits nach wie vor noch genügend große Verbindungsflächen zur dauerhaften und wartungsfreien Klebeverbindung zwischen erfindungsgemäßer Fahrzeugsäule (1) und Front- (4) und Seitenscheiben (3) des Fahrzeugs.

Fig. 1 zeigt weiter, dass die zwei längeren Seiten des Profilquerschnitts (2) der Fahrzeugsäule (1) spitzwinklig in Richtung des Fahrzeuginneren aufeinander zustreben, bogenförmig miteinander verbunden sind und im Wesentlichen die gleiche Länge aufweisen. Dies verbessert insbesondere die Steifigkeit der Fahrzeugsäule (1) sowie verringert gleichzeitig auch die Breite der Fahrzeugsäule (1) bzgl. der Blickrichtung des Fahrzeugführers, sodass dessen Sichtfeld bzw. der Bereich seines Sichtwinkels sich entsprechend verbreitert bzw. vergrößert, zumindest nicht eingeschränkt wird.

Der in Fig. 1 gezeigte Teil der Karosserie des Fahrzeugs, Rahmen (5), deckt beim fertiggestellten Fahrzeug die Schnittstelle zwischen Seitenscheibe (3) und Frontscheibe (4), die auf die Klebeflächen (6,7) der Fahrzeugsäule (1) aufgeklebt sind, ab, sodass diese gegen Witterungsbedingungen, insbesondere Feuchtigkeit, etc. geschützt ist.

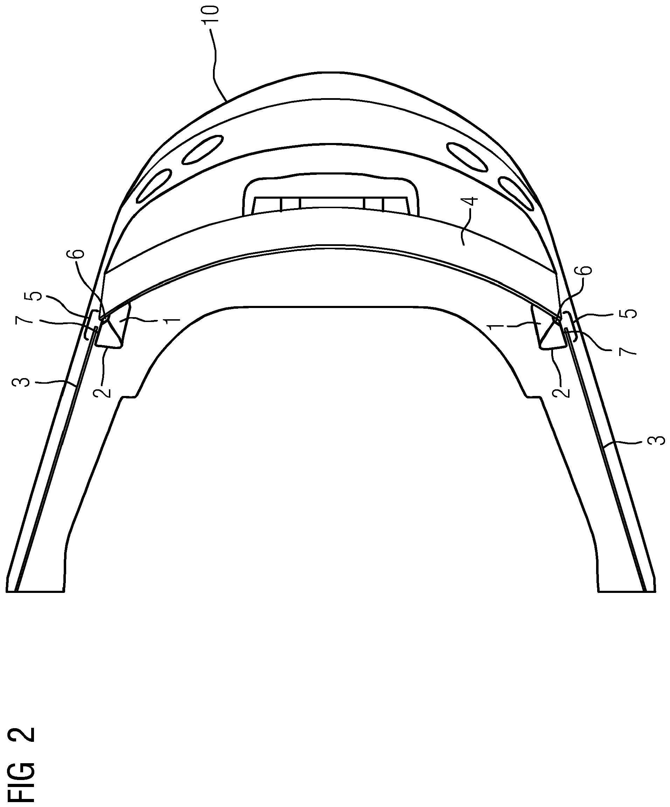

Fig. 2 zeigt eine Aufsicht auf den Querschnitt eines Schienenfahrzeugs (10), insbesondere Straßenbahn, mit zwei erfindungsgemäßen Fahrzeugsäulen (1).

Im Innern des Führerstands des Schienenfahrzeugs (10) ist in Fahrtrichtung jeweils links und rechts vorne eine erfindungsgemäße Fahrzeugsäule (1) mit deltoidem Profilquerschnitt (2) dargestellt, wobei die Fahrzeugsäulen (1) jeweils mit der Klebefläche (7) mit der linken bzw. rechten Seitenscheibe (3) sowie jeweils mit der Klebefläche (6) mit der Frontscheibe (4) des Schienenfahrzeugs (10) verklebt sind. Die beiden Schnittstellen zwischen Seiten- (3) und Frontscheibe (4) links und rechts des Schienenfahrzeugs (10) sind dabei außenseitig jeweils von einem Rahmen (5), als Teil der Karosserie abgedeckt und geschützt.

Fig. 2 zeigt deutlich den, bezüglich Schlankheit optimierten Profilquerschnitt (2) der Fahrzeugsäulen (1), die dem Fahrzeugführer ein optimiertes, möglichst breites, vorderes Sichtfeld insbesondere in Fahrtrichtung des Schienenfahrzeugs (10) ermöglichen.

## Patentansprüche

1. Fahrzeugsäule (1) für ein Schienenfahrzeug (10) wobei die Fahrzeugsäule (1) wenigstens teilweise für die Verbindung mit einer Frontscheibe (4) und einer Seitenscheibe (3) des Schienenfahrzeugs (10) vorgesehen ist,
**dadurch gekennzeichnet, dass**
die Fahrzeugsäule (1) als Hohlprofil mit einem im wesentlichen deltoiden Profilquerschnitt (2) ausgeführt ist, wobei der Profilquerschnitt (2) des Hohlprofils vier Seiten aufweist, von denen die zwei kürzeren Seiten des Profilquerschnitts (2) die beiden Seiten (6, 7) der Fahrzeugsäule (1) festlegen, die für die wenigstens teilweise unmittelbare Verbindung der Fahrzeugsäule (1) mit einer Frontscheibe (4) und einer Seitenscheibe (3) des Schienenfahrzeugs (10) vorgesehen sind, und wobei die Fahrzeugsäule (1) derart ausgeführt ist, dass die Seite (6) der Fahrzeugsäule (1), die wenigstens teilweise unmittelbar zur Verbindung mit der Frontscheibe (4) des Schienenfahrzeugs (10) vorgesehen ist, durch die kürzere der zwei kürzeren Seiten des Profilquerschnitts (2) des Hohlprofils festgelegt ist und dass die Seite (7) der Fahrzeugsäule (1), die wenigstens teilweise unmittelbar zur Verbindung mit der Seitenscheibe (3) des Schienenfahrzeugs (10) vorgesehen ist, durch die längere der zwei kürzeren Seiten des Profilquerschnitts (2) des Hohlprofils festgelegt ist.

2. Fahrzeugsäule (1) nach Anspruch 1,
**dadurch gekennzeichnet, dass**
die zwei kürzeren Seiten des Profilquerschnitts (2) des Hohlprofils stumpfwinklig aneinandergrenzen.

3. Fahrzeugsäule (1) nach einem der Ansprüche 1 oder 2,
**dadurch gekennzeichnet, dass**
die zwei kürzeren Seiten des Profilquerschnitts (2) des Hohlprofils in einem Winkelbereich zwischen 130° und 140° aneinandergrenzen.

4. Fahrzeugsäule (1) nach einem der vorherigen Ansprüche,
**dadurch gekennzeichnet, dass**
die Länge der zwei kürzeren Seiten des Profilquerschnitts (2) des Hohlprofils zusammengenommen im Wesentlichen der Länge einer der zwei längeren Seiten des Profilquerschnitts (2) des Hohlprofils entspricht.

5. Fahrzeugsäule (1) nach einem der vorherigen Ansprüche,
**dadurch gekennzeichnet, dass**
die zwei kürzeren Seiten des Profilquerschnitts (2) des Hohlprofils im Wesentlichen die gleiche Länge aufweisen.

6. Fahrzeugsäule (1) nach einem der Ansprüche 1 bis 4,
**dadurch gekennzeichnet, dass**
die Längen der zwei kürzeren Seiten des Profilquerschnitts (2) des Hohlprofils im Wesentlichen ein Verhältnis von 1 zu 2 zueinander aufweisen.

7. Fahrzeugsäule (1) nach einem der vorherigen Ansprüche,
**dadurch gekennzeichnet, dass**
die zwei längeren Seiten des Profilquerschnitts (2) des Hohlprofils spitzwinklig aneinandergrenzen.

8. Fahrzeugsäule (1) nach einem der vorherigen Ansprüche,
**dadurch gekennzeichnet, dass**
die zwei längeren Seiten des Profilquerschnitts (2) des Hohlprofils bogenförmig miteinander verbunden sind.

9. Fahrzeugsäule (1) nach einem der vorherigen Ansprüche,
**dadurch gekennzeichnet, dass**
die zwei längeren Seiten des Profilquerschnitts (2) des Hohlprofils im Wesentlichen die gleiche Länge aufweisen.

10. Fahrzeugsäule (1) nach einem der vorherigen Ansprüche,
**dadurch gekennzeichnet, dass**
die wenigstens teilweise unmittelbare Verbindung der beiden Seiten (6, 7) der Fahrzeugsäule (1) mit der Frontscheibe (4) und einer Seitenscheibe (3) des Schienenfahrzeugs (10) als Klebeverbindung ausgeführt ist.

11. Schienenfahrzeug (10) mit wenigstens zwei Fahrzeugsäulen (1) nach einem der Ansprüche 1 bis 10.

## Claims

1. Vehicle column (1) for a rail vehicle (10), wherein the vehicle column (1) is provided at least partially for connecting to a front pane (4) and a side pane (3) of the rail vehicle (10),
**characterised in that**
the vehicle column (1) is designed as a hollow profile with an essentially deltoid profile cross-section (2), wherein the profile cross-section (2) of the hollow profile has four sides, of which the two shorter sides of the profile cross-section (2) define the two sides (6, 7) of the vehicle column (1), which are provided for the at least partially direct connection between the vehicle column (1) and a front pane (4) and a side pane (3) of the rail vehicle (10), and wherein the vehicle column (1) is designed such that the side (6) of the vehicle column (1), which is provided at least partially directly for connection to the front pane (4) of the rail vehicle (10), is defined by the shorter of the two shorter sides of the profile cross-section (2) of the hollow profile and that the side (7) of the vehicle column (1), which is provided at least partially directly for connection to the side pane (3) of the rail vehicle (10), is defined by the longer of the two shorter sides of the profile cross-section (2) of the hollow profile.

2. Vehicle column (1) according to claim 1,
**characterised in that**
the two shorter sides of the profile cross-section (2) of the hollow profile are adjacent to one another in an obtuse-angled manner.

3. Vehicle column (1) according to one of claims 1 or 2,
**characterised in that**
the two shorter sides of the profile cross-section (2) of the hollow profile are adjacent to one another in an angular range of between 130° and 140°.

4. Vehicle column (1) according to one of the preceding claims,
**characterised in that**
the length of the two shorter sides of the profile cross-section (2) of the hollow profile corresponds altogether essentially to the length of one of the two longer sides of the profile cross-section (2) of the hollow profile.

5. Vehicle column (1) according to one of the preceding claims,
**characterised in that**
the two shorter sides of the profile cross-section (2) of the hollow profile have essentially the same length.

6. Vehicle column (1) according to one of claims 1 to 4,
**characterised in that**
the length of the two shorter sides of the profile cross-section (2) of the hollow profile essentially has a ratio of 1:2 in respect to each other.

7. Vehicle column (1) according to one of the preceding claims,
**characterised in that**
the two longer sides of the profile cross-section (2) of the hollow profile are adjacent to one another in an acute-angled manner.

8. Vehicle column (1) according to one of the preceding claims,
**characterised in that**
the two longer sides of the profile cross-section (2) of the hollow profile are connected together forming an arc.

9. Vehicle column (1) according to one of the preceding claims,
**characterised in that**
the two longer sides of the profile cross-section (2) of the hollow profile have essentially the same length.

10. Vehicle column (1) according to one of the preceding claims,
**characterised in that**
the at least partially direct connection of the two sides (6, 7) of the vehicle column (1) to the front pane (4) and a side pane (3) of the rail vehicle (10) is designed as an adhesive connection.

11. Rail vehicle (10) with at least two vehicle columns (1) according to one of claims 1 to 10.

## Revendications

1. Montant (1) de véhicule d'un véhicule (10) ferroviaire dans lequel le montant (1) de véhicule est prévu au moins en partie pour la liaison à une vitre (4) avant et à une vitre (3) latérale du véhicule (10) ferroviaire
**caractérisé en ce que**
le montant (1) de véhicule est réalisé sous la forme d'un profilé creux ayant une section (2) transversale de profilé sensiblement deltoïde, dans lequel la section (2) transversale du profilé creux a quatre côtés, dont les deux côtés les plus petits de la section transversale du profilé déterminent les deux côtés (6, 7) du montant (1) du véhicule, qui sont prévus pour la liaison au moins en partie directe du montant (1) de véhicule à une vitre (4) avant et à une vitre (3) latérale du véhicule (10) ferroviaire, et dans lequel le montant (1) de véhicule est réalisé de manière à ce que le côté (6) du montant (1) de véhicule, qui est prévu pour la liaison au moins en partie directement avec la vitre (4) avant du véhicule (10) ferroviaire, soit défini par le plus petit des deux côtés les plus petits de la section (2) transversale du profilé creux et **en ce que** le côté (7) du montant (1) de véhicule, qui est prévu pour la liaison au moins en partie directement avec la vitre (3) latérale du véhicule (10) ferroviaire, est défini par le plus grand des deux côtés les plus petits de la section (2) transversale du profilé creux.

2. Montant (1) de véhicule suivant la revendication 1,
**caractérisé en ce que** les deux côtés les plus petits de la section (2) transversale du profilé creux sont contigus en faisant un angle obtus.

3. Montant (1) de véhicule suivant l'une des revendications 1 ou 2,
**caractérisé en ce que** les deux côtés les plus petits de la section (2) transversale du profilé creux sont contigus dans une plage angulaire comprise entre 130° et 140°.

4. Montant (1) de véhicule suivant l'une des revendications précédentes,
**caractérisé en ce que** la longueur des deux côtés les plus petits de la section (2) transversales du profilé creux pris ensemble correspond sensiblement à la longueur de l'un des deux grands côtés de la section (2) transversale du profilé creux.

5. Montant (1) de véhicule suivant l'une des revendications précédentes,
**caractérisé en ce que** les deux côtés les plus petits de la section (2) transversale du profilé creux ont sensiblement la même longueur.

6. Montant (1) de véhicule suivant l'une des revendications 1 à 4,
**caractérisé en ce que** les longueurs des deux côtés les plus petits de la section (2) transversale du profilé creux sont sensiblement dans un rapport de 1 à 2.

7. Montant (1) de véhicule suivant l'une des revendications précédentes,
**caractérisé en ce que** les deux côtés les plus grands de la section (2) transversale du profilé creux sont contigus en faisant entre eux un angle aigu.

8. Montant (1) de véhicule suivant l'une des revendications précédentes,
**caractérisé en ce que** les deux côtés les plus grands de la section (2) transversale du profilé creux sont reliés entre eux en forme d'arc.

9. Montant (1) de véhicule suivant l'une des revendications précédentes,
**caractérisé en ce que** les deux côtés les plus grands de la section (2) transversale du profilé creux ont sensiblement la même longueur.

10. Montant (1) de véhicule suivant l'une des revendications précédentes,
**caractérisé en ce que** la liaison au moins en partie directe des deux côtés (6, 7) du montant (1) de véhicule avec la vitre (4) avant et avec une vitre (3) latérale du véhicule (10) ferroviaire est réalisée sous la forme d'un collage.

11. Véhicule (10) ferroviaire ayant au moins deux montants (1) de véhicule suivant l'une des revendications 1 à 10.
